# FASCICULE DE BREVET EUROPEEN

(11) **EP 3 721 111 B1**
(45) Date de publication et mention de la délivrance du brevet: **25.10.2023**
(21) Numéro de dépôt: 18827154.8
(22) Date de dépôt: 09.11.2018
(51) Int. Cl.: F16D 48/06

(54) **PROCEDE DE DETECTION D'UN ETAT DE GLISSEMENT D'EMBRAYAGE POUR UN VEHICULE AUTOMOBILE**
VERFAHREN ZUR ERKENNUNG EINES KUPPLUNGSSCHLUPFZUSTANDS FÜR EIN KRAFTFAHRZEUG
METHOD FOR DETECTING A CLUTCH SLIP STATE FOR A MOTOR VEHICLE

(30) Priorité: 05.12.2017 FR 1761654
(43) Date de publication de la demande: 14.10.2020
(73) Titulaire: PSA Automobiles SA, 78300 Poissy (FR)
(72) Inventeur: ROCQ, Gaetan, 78125 La Boissiere Ecole (FR); MILHAU, Yohan, 78630 Orgeval (FR)
(86) Numéro de dépôt international: PCT/FR2018/052796
(87) Numéro de publication internationale: WO 2019/110880

(56) Documents cités:
- DE-A1- 19 505 561
- DE-A1-102011 105 990
- US-A- 4 635 769

## Description

Le domaine de l'invention concerne un procédé de détection d'un état de glissement d'un embrayage pour un groupe motopropulseur de véhicule automobile.

Un groupe motopropulseur de véhicule automobile comporte généralement un moteur comportant un arbre entrainant, une boite de vitesses et un embrayage permettant de coupler l'arbre entrainant et l'arbre d'entrée de la boite de vitesses de manière à interrompre la transmission de couple moteur aux roues ou à transmettre un couple moteur aux roues, soit directement lorsque l'embrayage est en état fermé, soit en patinage lorsque l'embrayage est en état de glissement.

Lors d'un décollage, d'un changement de rapport ou d'une transition de mode de propulsion dans le cas de véhicule hybride (par exemple le passage entre un mode de traction électrique à un mode de traction thermique), il est primordial de pouvoir détecter le plus précisément possible le passage de l'état fermé à l'état de glissement de l'embrayage, notamment afin d'optimiser le pilotage du moteur thermique.

Les procédés de détection d'un état de glissement d'un embrayage sont bien connus et le plus souvent consistent à mesurer un écart de régime entre l'arbre entrainant et l'arbre primaire de la boite de vitesses et à signaler un état de glissement lorsque l'écart de régime dépasse un seuil prédéterminé, le plus souvent calibré entre 20trs/min et 50trs/min. On connait par exemple, des documents FR2572032_A1, DE102011105990_A1, US4635769_A ou encore DE19505561_A1 une solution de régulation du patinage d'un embrayage en fonction de la mesure d'un écart de régime entre l'arbre moteur et l'arbre primaire de la boite de vitesses. Cependant, dans le cas d'un écart de régime faible et inférieur au seuil calibré, une situation de patinage peut ne pas être détectée par un tel procédé.

La demanderesse a développé une solution alternative décrite dans le document EP1731788_A1. Ce document décrit un procédé de détection et d'estimation d'un glissement à partir de l'observation d'un taux d'acyclismes. Bien qu'intéressant, ce procédé n'est pas applicable pour les groupes motopropulseurs dans lesquels l'embrayage est muni d'un amortisseur de torsion. En effet, pour filtrer les acyclismes moteur, il est courant de monter un amortisseur de torsion sur un disque d'embrayage. L'inconvénient de l'utilisation d'un amortisseur est que celui-ci empêche l'observation d'un taux d'acyclismes qui est nécessaire pour la mise en oeuvre du procédé.

De plus, l'amortisseur de torsion comprend des ressorts permettant une liberté torsionnelle entre l'arbre d'entrée et l'arbre de sortie de l'embrayage et provoquant donc des écarts de régime de faible amplitude dépendant du couple transmis, même en état fermé de l'embrayage. On comprend donc que les différences de régime permises par l'amortisseur de torsion peuvent engendrer des détections de patinage erronées lorsque la stratégie de détection du patinage se fonde sur un écart de régime par rapport à un seuil de régime prédéterminé.

Il existe donc un besoin de proposer une solution de détection d'un état de glissement d'un embrayage permettant de résoudre les problèmes précités. Un objectif de l'invention est d'améliorer la précision de détection d'un état de glissement pour optimiser le pilotage du groupe motopropulseur, notamment pour les transitoires tels qu'un décollage, un changement de rapport de vitesses ou un changement de mode de traction. Un autre objectif est de proposer une solution de détection pouvant s'appliquer aux embrayages équipés d'un amortisseur de torsion.

Plus précisément, l'invention concerne un procédé de détection d'un état de glissement d'un embrayage pour un groupe motopropulseur de véhicule automobile, ledit embrayage accouplant un arbre d'entrée et un arbre de sortie. Selon l'invention, le procédé comporte pendant un état fermé dudit embrayage les étapes suivantes :
- la détermination d'un angle de torsion correspondant à une rotation relative entre l'arbre de sortie et l'arbre d'entrée,
- la comparaison de l'angle de torsion avec un seuil de torsion de l'embrayage,
- et le signalement d'un état de glissement en cas de détection d'un dépassement du seuil de torsion par l'angle de torsion.

L'invention s'applique à un véhicule automobile dans lequel l'embrayage comporte un amortisseur de torsion, ce seuil de torsion étant une valeur de déformation en torsion de l'amortisseur pour un couple transmissible maximum de l'embrayage commandé pendant ledit état fermé, la valeur de déformation en torsion étant calculée en fonction du couple transmissible maximum et d'une raideur définissant le comportement en torsion de l'amortisseur.

Selon une variante du procédé, l'angle de torsion est calculé par un module intégrateur à partir d'un signal d'information représentatif d'un écart de régime entre l'arbre de sortie et l'arbre d'entrée.

Plus précisément, le module intégrateur initie le calcul d'intégration en cas de détection de l'état fermé dudit embrayage.

Dans une variante de détermination de l'angle de torsion, l'angle de torsion est déterminé à partir d'une mesure réalisée par un capteur d'angle.

Dans une variante du procédé, le signalement du glissement est exécuté seulement lorsque la durée du dépassement est supérieure à une durée prédéterminée.

Il est également prévu selon l'invention, un véhicule automobile comportant un groupe motopropulseur piloté par un dispositif de contrôle dans lequel le dispositif de contrôle est configuré pour mettre en oeuvre le procédé selon l'un quelconque des modes de réalisation précédents.

Le procédé est une solution de détection d'un état de glissement à fiabilité améliorée au regard d'une solution se basant sur écart de régime et un seuil de régime, notamment lorsqu'un faible écart de régime perdure dans le temps. Le procédé améliore le pilotage des phases de transitoires et permet d'éviter les trous de couple, chocs ou oscillations provoquées par un pilotage du moteur thermique non adapté à l'état de l'embrayage. Le procédé évite en particulier les désagréments acoustiques et vibratoires résultant d'une envolée de régime moteur. Le procédé améliore ainsi l'agrément de conduite.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
la figure 1 représente schématiquement un groupe motopropulseur de véhicule automobile comportant un embrayage muni d'un amortisseur de torsion reliant un moteur thermique et une boite de vitesses ;
la figure 2 représente schématiquement un disque de friction de l'embrayage portant l'amortisseur de torsion et illustre l'introduction d'un angle de torsion entre l'arbre de sortie et l'arbre d'entrée sous l'action d'un couple moteur généré par le moteur thermique ;
la figure 3 représente un module de détection configuré pour mettre en oeuvre le procédé de détection d'un état de glissement selon l'invention ;
la figure 4 est un organigramme illustrant un algorithme de mise oeuvre du procédé de détection selon l'invention;
la figure 5 représente une séquence de roulage durant laquelle un état de glissement de l'embrayage est détecté par le procédé selon l'invention.

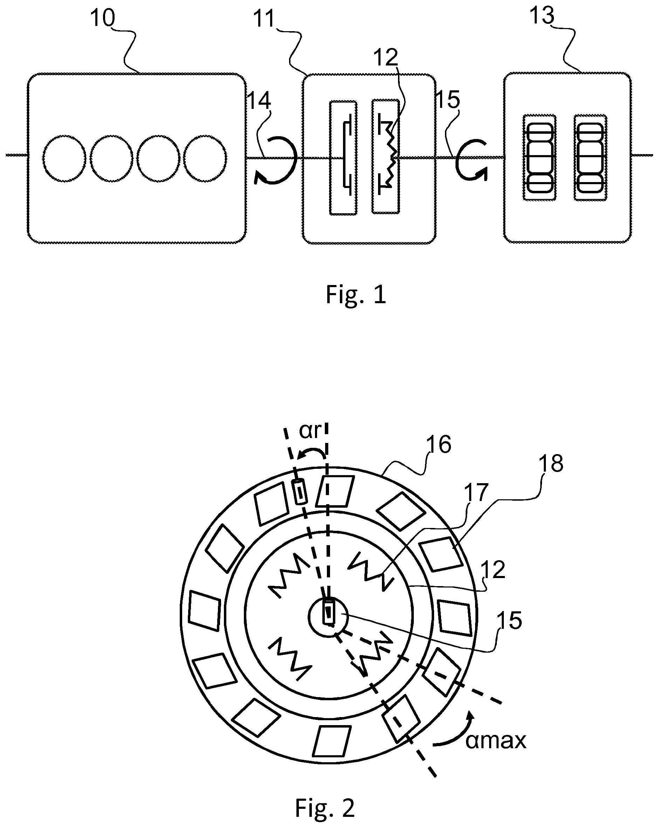

La figure 1 représente schématiquement un groupe motopropulseur de véhicule automobile pour lequel on applique le procédé de détection de l'invention. Le groupe motopropulseur comporte un moteur thermique 10 comprenant un arbre entrainant 14 relié à un élément d'entrée de l'embrayage 11. L'embrayage 11 comporte un élément de sortie relié à un arbre primaire 15 d'une boite de vitesses 13. La boite de vitesses est reliée par son arbre de sortie à des roues du véhicule. De plus, l'embrayage 11 comporte un amortisseur de torsion 12 monté sur un disque de friction de l'embrayage et qui est destiné à empêcher la propagation de vibrations et de bruit dans la chaine de transmission du groupe motopropulseur prenant origine dans les acyclismes de rotation du moteur thermique 10. L'embrayage 11 et la boite de vitesses 13 sont des organes de transmission de couple robotisés à pilotage automatisé. Lorsque l'embrayage est commandé en état fermé, les disques de friction de l'embrayage sont dits collés, le couple transmissible par l'embrayage est alors égal ou supérieur au couple moteur entrainant. En état de glissement, une partie du couple moteur, ayant la valeur du couple transmissible maximum de l'embrayage, est transmise par l'embrayage. En état ouvert, la transmission du couple moteur est interrompue.

La figure 2 représente schématiquement un l'amortisseur de torsion 12 qui est dans ce mode de réalisation du type d'un moyeu amortisseur monté sur un disque de friction de l'embrayage 11. De tels dispositifs amortisseurs sont bien connus de l'homme du métier. Le moyeu amortisseur 12 de l'embrayage 11 comporte un élément entrainant d'entrée et un élément de sortie de la forme d'un disque qui sont mobiles en rotation autour d'un axe commun. L'élément de sortie est solidaire en rotation de l'arbre primaire 15 de la boite de vitesses tandis que l'élément entrainant d'entrée est solidaire en rotation de la couronne 16 du disque de friction. La couronne 16 porte les zones périphériques de friction 18 qui sont destinées à faire friction avec l'autre disque de friction de l'embrayage 11, l'autre disque de friction étant solidaire en rotation de l'arbre entrainant du moteur thermique.

De plus, le moyen amortisseur 12 comporte des organes élastiques 17, par exemple de type ressort hélicoïdal à action circonférentielle, repartis radialement sur le moyeu 12 et reliant l'élément de sortie et l'élément entrainant d'entrée du moyeu 12. Les organes élastiques 17 ont pour effet d'amortir les acyclismes générés par le moteur thermique.

Comme cela est connu, les organes élastiques 17 permettent une rotation relative selon un angle de torsion entre l'élément entrainant d'entrée et l'élément de sortie du moyeu amortisseur 12. De plus, le comportement mécanique du moyeu amortisseur 12 est similaire à un ressort de compression déformable en torsion et peut être caractérisé par une raideur k s'exprimant en N.m/degré. En état fermé, l'embrayage est piloté selon une consigne représentative d'un couple transmissible maximum par l'embrayage. Pour un couple transmissible maximum appliqué en entrée du moyeu 12, il est possible de déduire une déformation en torsion maximum αmax du moyeu 12, s'exprimant en degré ou radian, qui est calculable en fonction de la raideur k du moyeu 12 et de la valeur de couple transmissible maximum Ctr selon la relation suivante : αmax = Ctr^{∗}1/k.

Par ailleurs, pendant un état fermé de l'embrayage, il est possible d'estimer un angle de torsion relatif αr entre l'arbre primaire de la boite de vitesses et l'arbre entraînant du moteur thermique se formant durant l'état fermé de l'embrayage. Comme on le sait, de par l'action des organes élastiques 17, Il existe continuellement un angle de torsion αr entre l'arbre entrainant du moteur thermique et l'arbre primaire de la boite de vitesses. Durant un état fermé, l'écart de régime entre l'arbre de sortie et l'arbre entrainant tend à osciller autour d'une valeur nulle selon une déformation en torsion permise par le moyeu amortisseur. L'angle de torsion αr tend donc à osciller autour d'une valeur nulle tant que l'embrayage est en état fermé. Toutefois, lorsque l'embrayage entre en état de glissement, l'angle de torsion peut devenir supérieur à la déformation en torsion permise du fait de l'écart de régime de glissement.

L'invention propose un procédé de détection d'un état de glissement de l'embrayage exploitant astucieusement l'angle de torsion αr mesuré ou estimé durant un état fermé de l'embrayage et la déformation en torsion maximum αmax du moyeu amortisseur correspondant au couple transmissible maximum commandé. Grâce au procédé, il est possible de détecter précisément l'instant à partir duquel l'angle de torsion αr mesuré ou estimé devient supérieur à la déformation en torsion maximum permise par l'amortisseur en torsion. Cet instant correspond au début d'une phase de patinage de l'embrayage.

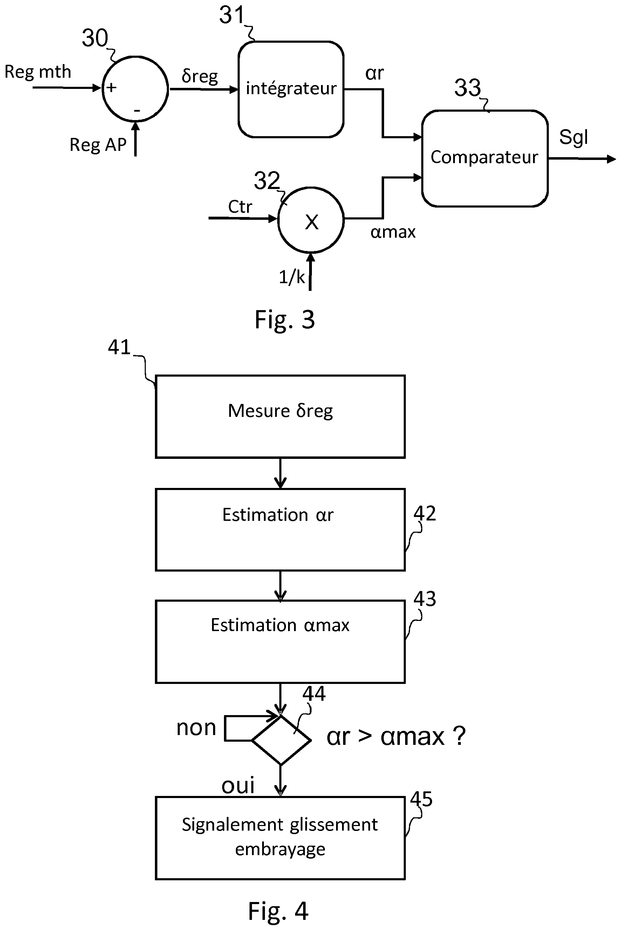

On décrit maintenant en figure 3 un module de détection d'un dispositif de contrôle du groupe motopropulseur du véhicule configuré pour mettre en oeuvre le procédé de détection. Le dispositif de contrôle est une unité de commande à calculateurs à circuits intégrés, couramment désigné par superviseur ou par ECU, l'acronyme anglais pour « Electronic Control Unit ». Le dispositif de contrôle est par exemple l'unité de commande du moteur thermique.

Le module de détection comporte un premier module de calcul différentiel 30 apte à déterminer une valeur d'écart de régime δreg entre le régime de l'arbre entrainant en entrée de l'embrayage et le régime de l'arbre mené en sortie de l'embrayage, pour l'architecture décrite en figure 1 correspondant respectivement au régime de l'arbre entrainant 14 du moteur thermique 10 et le régime de l'arbre primaire 15 de la boite de vitesses 13. Les valeurs de régime sont connues du dispositif de contrôle, par exemple à partir de données circulant sur un bus de communication du groupe motopropulseur.

En outre, le module de détection comporte un module intégrateur 31 apte à déterminer une valeur de l'angle de torsion αr correspondant à une rotation relative entre l'arbre de sortie et l'arbre d'entrée durant l'état fermé de l'embrayage à partir de l'écart de régime δreg. Le module intégrateur exécute un calcul d'intégration numérique temporelle sur une période d'observation initiée à partir de l'instant d'effectivité de la commande de fermeture de l'embrayage.

Dans une variante, il peut être prévu que les modules 30, 31 soient remplacés par un module à capteur d'angle apte à mesurer une rotation relative entre l'arbre entrainant et l'arbre de sortie de l'embrayage (par exemple module à détection optique).

De plus, le module de détection comporte un module multiplicateur 32 apte à calculer un seuil de torsion de l'amortisseur pour un couple transmissible maximum de l'embrayage pendant un état fermé. Plus précisément, dans une variante de calcul s'appliquant pour l'architecture de groupe motopropulseur décrite en figure 1, le seuil de torsion αmax est déterminé à partir de la déformation en torsion potentielle de l'amortisseur 12 de l'embrayage 11 pendant un état fermé. Le seuil de torsion est calculé en fonction d'un couple transmissible maximum Ctr par l'embrayage pendant l'état fermé et d'une raideur k définissant le comportement de l'amortisseur en déformation en torsion. On précise que le couple transmissible maximum Ctr est déterminable en fonction d'une pression, position ou force pilotée par le circuit de commande de l'embrayage. La raideur k est un paramètre prédéterminé en conception et connu du module de détection (k pouvant être constante ou variable en fonction de paramètres physiques mesurables tels la température, l'angle, l'usure).

Le module de détection comporte en outre un module comparateur 33 apte à détecter le dépassement du seuil de torsion αmax par l'angle de torsion αr. Le module 33 génère un signal d'information Sgl permettant le signalement du dépassement et donc du début de l'état de glissement.

On décrit maintenant en figure 4 le procédé de détection d'un état de glissement de l'embrayage à partir d'un état fermé de l'embrayage. Le procédé de détection est mis en oeuvre dans le cadre du pilotage du groupe motopropulseur, notamment pour le pilotage du moteur thermique. Par exemple, afin d'optimiser le pilotage du moteur thermique, pour des raisons d'agrément de conduite, précision de consigne de régime, ou de réduction de bruit et vibration dans la chaine de transmission, le pilotage pourra être opéré soit en consigne de couple, soit en consigne de régime en fonction d'un signalement d'un état de glissement de l'embrayage.

Le procédé de détection comporte une première étape 41 consistant à mesurer l'écart de régime δreg entre le régime de l'arbre entrainant en entrée de l'embrayage et le régime de l'arbre mené en sortie de l'embrayage.

Ensuite, le procédé comporte une deuxième étape 42 de détermination d'un angle de torsion αr correspondant à une rotation relative entre l'arbre entrainant et l'arbre mené en sortie depuis un instant à partir duquel l'état fermé de l'embrayage est garanti par le dispositif de contrôle. L'angle de torsion αr est calculé au moyen du module de détection décrit en figure 3 à partir d'un calcul d'intégration temporelle. Plus précisément, le module intégrateur 31 initie le calcul d'intégration en cas de détection de l'état fermé dudit embrayage à partir de l'écart de régime δreg. Lorsque l'embrayage est piloté par une consigne de couple transmissible, l'état fermé est atteint lorsque le couple transmissible atteint ladite consigne.

Le calcul d'intégration numérique exploite judicieusement les données de régimes disponibles pour le superviseur du groupe motopropulseur. Il s'agit d'une solution de détection peu coûteuse pouvant être mis en oeuvre par tout dispositif de calcul sans modification matérielle de la chaine de transmission du groupe motopropulseur.

Dans une variante du procédé, on rappelle que l'angle de torsion peut être mesuré par un module à capteur d'angle apte à mesurer un angle de torsion entre l'arbre entrainant et l'arbre mené de l'embrayage. Le procédé comporte alors en remplacement des étapes 41, 42, une étape de mesure d'un angle de torsion correspondant à une rotation relative entre l'arbre entrainant et l'arbre mené de sortie, la mesure étant initiée en cas de détection de l'état fermé dudit embrayage.

En outre, à une troisième étape 43, le procédé de détection comporte une étape de détermination d'un seuil de torsion de l'embrayage. Plus précisément, le seuil de torsion est une valeur de déformation en torsion de l'amortisseur de l'embrayage pour le couple transmissible maximum Ctr de l'embrayage commandé pendant l'état fermé, connu à partir de la consigne de commande en pression, en force ou en position du circuit de commande de l'embrayage. Typiquement, le couple transmissible maximum pour une application automobile est compris dans une plage de valeur d'environ 100N.m à 400N.m.

Plus précisément, la valeur de déformation en torsion est calculée en fonction du couple transmissible maximum Ctr et de la raideur k définissant le comportement de l'amortisseur en déformation en torsion selon la relation αmax = Ctr*1/k. Par exemple, la raideur de l'amortisseur est d'environ 15 N.m/degré de l'angle de torsion.

A une quatrième étape 44, le procédé de détection comporte ensuite la comparaison de l'angle de torsion αr avec le seuil de torsion αmax. En cas de détection d'un dépassement du seuil de torsion par l'angle de torsion αr, le procédé comporte à une étape 45 le signalement d'un état de glissement. Le signalement de l'état de glissement est opéré par la génération d'un signal d'information (par exemple signal d'état binaire) pouvant être exploité par un module de pilotage du groupe motopropulseur, notamment du moteur thermique ou la boite de vitesses. Par exemple, le pilotage du moteur thermique peut être piloté en consigne de couple ou consigne de régime en fonction dudit signal d'information indiquant l'état de glissement ou l'état fermé de l'embrayage.

Dans une variante du procédé, le signalement de l'état de glissement est exécuté seulement lorsque la durée du dépassement est supérieure à une durée prédéterminée. Il s'agit d'une mesure de vérification mise en oeuvre par une temporisation afin de stabiliser la détection de l'état de glissement.

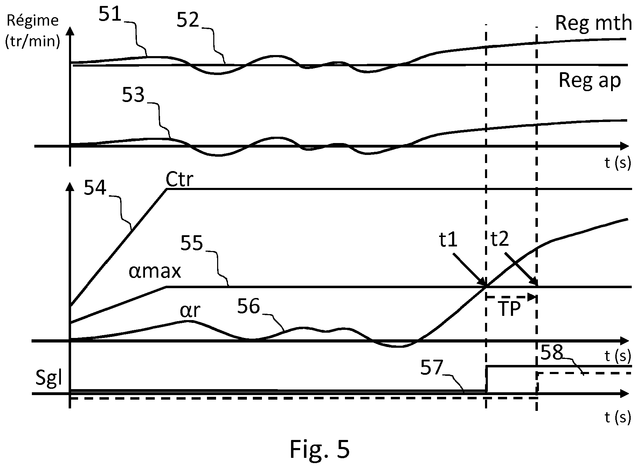

La figure 5 représente une séquence de roulage représentant un passage d'un état fermé de l'embrayage à un état de glissement. Un graphique en partie supérieure représente trois courbes de régime en trs/min, la courbe 51 en oscillation de régime représentant le régime du moteur thermique Reg mth, la courbe 52 stabilisée (grâce au moyen amortisseur) représentant le régime de l'arbre primaire Reg ap, et la courbe 53 représentant l'écart de régime entre le régime du moteur thermique et de l'arbre primaire.

En partie inférieure du graphique de la figure 5, on a représenté par la courbe 54, le couple transmissible de l'embrayage Ctr en N.m et le seuil de torsion αmax en correspondance du couple transmissible Ctr par la courbe 55 en degré. La courbe 56 représente l'angle de torsion correspondant à une rotation relative αr, en degré, entre l'arbre menant du moteur thermique et l'arbre primaire qui est calculé en fonction de l'écart de régime représenté par la courbe 53. De plus, on a représenté un signal d'état binaire Sgl, ledit signal indiquant un état de glissement lorsqu'il est positionné à l'état haut. Deux courbes 57, 58 du signal sont représentées, en trait plein et trait pointillé respectivement, pour représenter la variante de détection sans temporisation et la variante de détection avec l'application de la temporisation pour stabiliser la détection.

Comme on le voit en figure 5, avant l'instant t1 l'angle de torsion αr est oscillant et inférieur au seuil de torsion αmax, du fait que l'écart de régime est généré par l'action de l'amortisseur de torsion de l'embrayage. On prend l'hypothèse que l'état fermé est effectif dès le début de la situation représentée en figure 5. L'angle de torsion αr est calculé dès la détection de l'état fermé.

Dans la première variante du procédé, à l'instant t1, le procédé détecte un dépassement du seuil de torsion αmax, l'angle de torsion augmentant du fait d'une augmentation progressive de l'écart de régime générée par un début de glissement entre l'arbre du moteur thermique et l'arbre primaire de la boite de vitesses. A l'instant t1, le procédé détecte un angle de torsion qui est supérieur à la déformation torsionnelle pouvant être attendue pour le moyeu amortisseur lorsque le couple transmissible Ctr lui est appliqué. Il s'agit donc d'une situation de glissement. Le signal Sgl (courbe 57) passe alors à l'état haut de manière à signaler un état de glissement.

Dans la deuxième variante du procédé, le procédé exécute le signalement du glissement seulement lorsque la durée du dépassement est supérieure à une durée prédéterminée TP conformément à la temporisation prévue. Le signal Sgl (courbe 58) passe à l'état haut à l'instant t2.

Le procédé de détection d'un état de glissement peut être mis en oeuvre pour tout type de groupe motopropulseur de véhicule dont la chaine de transmission d'un couple moteur aux roues est équipée d'un embrayage, et de préférence un embrayage muni d'un amortisseur de torsion. L'invention s'applique aux véhicules à propulsion conventionnelle thermique, mais aussi aux véhicules à propulsion hybride dans laquelle la chaine de transmission peut être équipée en plus du moteur thermique d'une machine de traction électrique, par exemple attelée à l'arbre primaire de la boite de vitesses. Le procédé s'applique de préférence au pilotage d'un embrayage robotisé et d'une boite de vitesses robotisée à pilotage automatisé.

## Revendications

1. Procédé de détection d'un état de glissement d'un embrayage (11) pour un groupe motopropulseur de véhicule automobile, ledit embrayage accouplant un arbre d'entrée et un arbre de sortie, le procédé comportant pendant un état fermé dudit embrayage les étapes suivantes :
- la détermination (42) d'un angle de torsion (αr) correspondant à une rotation relative entre l'arbre de sortie (15) et l'arbre d'entrée (14),
- la comparaison (44) de l'angle de torsion (αr) avec un seuil de torsion (αmax) de l'embrayage,
- et le signalement (45) d'un état de glissement en cas de détection d'un dépassement du seuil de torsion (αmax) par l'angle de torsion (αr),
**caractérisé en ce que**, l'embrayage comportant un amortisseur de torsion (12), le seuil de torsion (αmax) est une valeur de déformation en torsion de l'amortisseur pour un couple transmissible maximum (Ctr) de l'embrayage (12) commandé pendant ledit état fermé et la valeur de déformation en torsion est calculée en fonction du couple transmissible maximum (Ctr) et d'une raideur (k) définissant le comportement en torsion de l'amortisseur.

2. Procédé de détection selon la revendication 1, **caractérisé en ce que** l'angle de torsion (αr) est calculé par un module intégrateur (31) à partir d'un signal d'information représentatif d'un écart de régime (δreg) entre l'arbre de sortie (15) et l'arbre d'entrée (14).

3. Procédé de détection selon la revendication 2, **caractérisé en ce que** le module intégrateur (31) initie le calcul d'intégration en cas de détection de l'état fermé dudit embrayage.

4. Procédé de détection selon la revendication 1, **caractérisé en ce que** l'angle de torsion (αr) est déterminé à partir d'une mesure réalisée par un capteur d'angle.

5. Procédé de détection selon l'une quelconque des revendications 1 à 4, **caractérisé en ce que** le signalement du glissement (45) est exécuté seulement lorsque la durée du dépassement est supérieure à une durée prédéterminée (TP).

6. Véhicule automobile comportant un groupe motopropulseur piloté par un dispositif de contrôle, **caractérisé en ce que** le dispositif de contrôle est configuré pour mettre en oeuvre le procédé selon l'une quelconque des revendications 1 à 5.

## Patentansprüche

1. Verfahren zum Erkennen eines Rutschzustands einer Kupplung (11) für einen Antriebsstrang eines Kraftfahrzeugs, wobei die Kupplung eine Eingangswelle und eine Ausgangswelle koppelt, wobei das Verfahren während eines geschlossenen Zustands der Kupplung die folgenden Schritte umfasst:
- die Bestimmung (42) eines Torsionswinkels (ar), der einer Relativdrehung zwischen der Ausgangswelle (15) und der Eingangswelle (14) entspricht,
- der Vergleich (44) des Torsionswinkels (ar) mit einer Torsionsschwelle (amax) der Kupplung,
- und die Signalisierung (45) eines Schlupfzustandes bei Erkennung einer Überschreitung der Torsionsschwelle (amax) um den Torsionswinkel (ar), **dadurch gekennzeichnet, dass** die Kupplung einen Torsionsdämpfer (12) umfasst und der Torsionsschwellenwert (amax) ein Torsionsverformungswert des Dämpfers für ein maximal übertragbares Drehmoment (Ctr) der Kupplung (12) ist, das während des geschlossenen Zustands und des Torsionszustands gesteuert wird Der Verformungswert wird als Funktion des maximal übertragbaren Drehmoments (Ctr) und einer Steifigkeit (k) berechnet, die das Torsionsverhalten des Dämpfers definiert.

2. Erfassungsverfahren nach Anspruch 1, **dadurch gekennzeichnet, dass** der Torsionswinkel (ar) von einem Integratormodul (31) aus einem Informationssignal berechnet wird, das eine Drehzahldifferenz (5reg) zwischen der Ausgangswelle (15) und der Eingangswelle darstellt (14).

3. Erkennungsverfahren nach Anspruch 2, **dadurch gekennzeichnet, dass** das Integratormodul (31) die Integrationsberechnung im Falle der Erkennung des geschlossenen Zustands der Kupplung einleitet.

4. Erfassungsverfahren nach Anspruch 1, **dadurch gekennzeichnet, dass** der Verdrehwinkel (ar) aus einer Messung eines Winkelsensors ermittelt wird.

5. Erkennungsverfahren nach einem der Ansprüche 1 bis 4, **dadurch gekennzeichnet, dass** die Schlupfsignalisierung (45) nur dann ausgeführt wird, wenn die Dauer des Überlaufs größer als eine vorgegebene Dauer (TP) ist.

6. Kraftfahrzeug mit einem von einem Steuergerät gesteuerten Antriebsstrang, **dadurch gekennzeichnet, dass** das Steuergerät zur Durchführung des Verfahrens nach einem der Ansprüche 1 bis 5 konfiguriert ist.

## Claims

1. Method for detecting a slipping state of a clutch (11) for a motor vehicle powertrain, said clutch coupling an input shaft and an output shaft, the method comprising during a closed state of said clutch the following steps :
- the determination (42) of a torsion angle (ar) corresponding to a relative rotation between the output shaft (15) and the input shaft (14),
- the comparison (44) of the torsion angle (ar) with a torsion threshold (amax) of the clutch,
- and the signaling (45) of a slip state in the event of detection of an overrun of the torsion threshold (amax) by the angle of torsion (ar), **characterized in that**, the clutch comprising a torsion damper (12), the torsion threshold (amax) is a torsional deformation value of the damper for a maximum transmissible torque (Ctr) of the clutch (12) controlled during said closed state and the torsional deformation value is calculated as a function of the maximum transmissible torque (Ctr) and a stiffness (k) defining the torsional behavior of the damper.

2. Detection method according to Claim 1, **characterized in that** the angle of torsion (ar) is calculated by an integrator module (31) from an information signal representative of a speed difference (5reg) between the output shaft (15) and the input shaft (14).

3. Detection method according to Claim 2, **characterized in that** the integrator module (31) initiates the integration calculation in the event of detection of the closed state of the said clutch

4. Detection method according to Claim 1, **characterized in that** the twist angle (ar) is determined from a measurement made by an angle sensor.

5. Detection method according to any one of Claims 1 to 4, **characterized in that** the slip signaling (45) is executed only when the duration of the overrun is greater than a predetermined duration (TP).

6. Motor vehicle comprising a powertrain controlled by a control device, **characterized in that** the control device is configured to implement the method according to any one of Claims 1 to 5.
